# EUROPEAN PATENT APPLICATION

(11) **EP 4 606 277 A1**
(43) Date of publication of application: **27.08.2025**
(21) Application number: 25158357.1
(22) Date of filing: 17.02.2025
(51) Int. Cl.: A47J 27/21

(54) **ELECTRICAL HEATER AND LIQUID HEATING VESSEL**

(30) Priority: 20.02.2024 GB 202402366
(71) Applicant: Otter Controls Limited, Derbyshire SK17 7LF (GB)
(72) Inventor: ROE, James, Buxton, SK17 7LF (GB); JERVIS, Hannah Susan, Buxton, SK17 7LF (GB); BASTARD, Jeannine Anne, Buxton, SK17 7LF (GB)
(74) Representative: Cross, James Peter Archibald

(57) **Abstract**

An electrical heater for a liquid heating vessel comprises a base plate having an upper side for forming at least part of the floor of a liquid reservoir of the vessel and an underside to which an electrical heating element is directly or indirectly attached. The base plate includes a raised portion arranged to project upwardly into the reservoir, the raised portion including heat diffusing material and being arranged above the heating element such that heat generated by the heating element passes through the heat diffusing material.

## Description

### Technical Field

The present invention relates to electric heaters for liquid heating vessels, and to liquid heating vessels, such as kettles, incorporating such electric heaters.

### Background

It is desirable to heat liquid in heating vessels such as kettles as quickly as possible, whether to boiling or to a lower temperature. For this reason, kettles with high power ratings of up to 3 kW have become popular, at least in countries where high mains voltages of 220-250 V AC are available. However, increasing the power levels of heaters in liquid heating vessels may also increase the noise generated during heating. This is understood to be associated with the nucleation of small bubbles that emanate from or close to the hot surface of the kettle element, rise within the liquid and then collapse. In doing so, they may create noise at a level equal to or greater than normal speech volume, around 60dBA. The hotter the element surface, the greater the speed and density of bubble generation.

Known proposals for reducing heating noise in kettles, as discussed for example in WO 2008/071983 A2, may have an adverse effect on thermal transfer to the liquid being heated and may therefore increase boil time. This is particularly the case with underfloor heaters for kettles, where the electric heating element is located under a thermally conductive base, typically made of stainless steel, of the reservoir of the kettle.

### Statements of Invention

Aspects of the invention are defined by the accompanying claims.

According to one aspect of the present invention, there is provided an underfloor heater for an electric kettle or the like, including a raised portion including heat diffusing material located above an underfloor heating element so as to assist heat transfer into the liquid to be heated. This may reduce noise and may also improve heating efficiency.

In one embodiment, the heat diffusing material is located within, or at least partially within, a concave underside of the raised portion and preferably in good thermal contact with the concave underside. The heat diffusing material may be pre-formed, or formed within the concave underside.

Alternatively, the heat diffusing material may be formed or attached to the upper side of the underfloor heater and thereby itself form the raised portion.

There may be a heat diffusing plate arranged or located between the heating element and the heat diffusing material. The heat diffusing plate may improve heat in a direction perpendicular to the raised portion, thereby avoiding hot spots which may contribute to heating noise and/or improving heat transfer into the liquid. The heat diffusing plate may be integral with the heat diffusing material, or may be a separate component in thermal contact with the heat diffusing material.

The raised portion may be raised relative to a planar central section and/or from an outer section of a base plate of the underfloor heater. The heating element is preferably arranged below a plane on the planar central section, for example for ease of assembly.

The raised portion preferably tapers in an upward direction, away from the heating element and into the liquid to be heated. This may reduce noise e.g. by inhibiting bubble collapse. The raised portion may have sides of low gradient and a central section of higher gradient.

Preferably, the raised portion is similar in width to the heating element, which may achieve efficient heat transfer. For example, the width may be between 10 and 20 mm.

The height of the raised portion may be selected so as to achieve good performance in noise reduction and/or heat transfer, subject to the limitations of the manufacturing process. For example, the height may be between 8 and 16 mm.

The heating element may be a sheathed heating element, or a thick film heating element.

Other aspects of the invention include a method of manufacture of the underfloor heater, in which either the heat diffusing material is pre-formed and then assembled at least partially within the concave underside of the raised portion, or is formed within the concave underside of the raised portion.

The scope of the invention extends to liquid heating vessels, such as kettles and the like, incorporating the underfloor heater.

### Brief Description of Drawings

Specific embodiments will now be described with reference to the accompanying drawings as identified below.

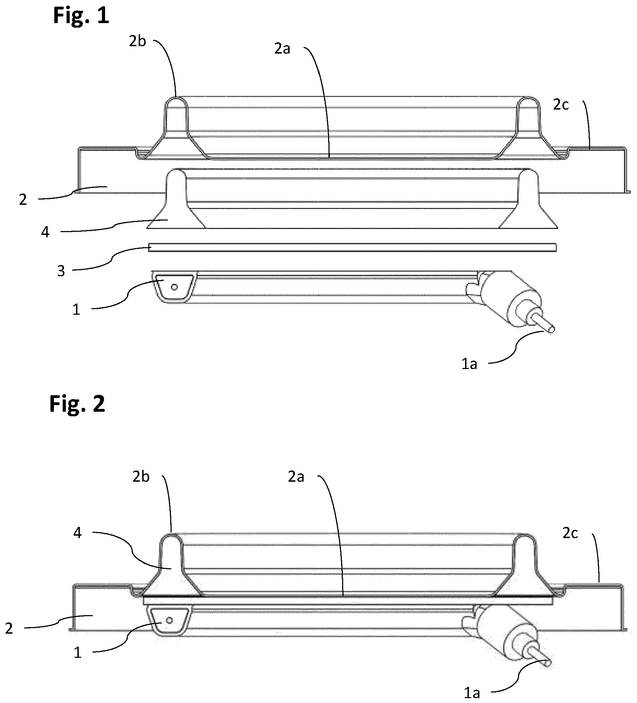

Figure 1 is an exploded cross-sectional diagram of an underfloor heater in an embodiment of the invention.
Figure 2 is an assembled cross section of the underfloor heater in the embodiment.
Figure 3 is a cross-section of a part of the underfloor heater including a heating element.
Figure 4a is a plan view of the underfloor heater from above.
Figure 4b is a plan view of the underfloor heater from below.
Figure 5 is a cross-sectional diagram of a kettle including the underfloor heater.
Figure 6 is a flow diagram of a first method of forming the underfloor heater.
Figure 7 is a flow diagram of a second method of forming the underfloor heater.

### Detailed Description of Embodiments

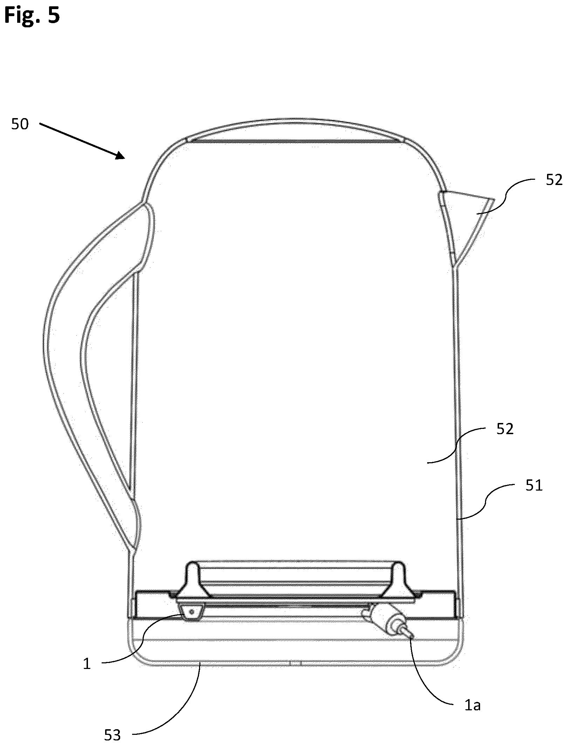

An electrical heater for a liquid heating vessel in an embodiment of the invention comprises an electric heating element 1, such as a sheathed heating element arranged on the underside (i.e. the dry side) of a stainless-steel base 2 that forms at least part of the floor of an electric kettle 50, and may for example be attached directly or indirectly (e.g. via an adapter ring) to the sidewall 51 of the electric kettle as shown in Figure 5. This attachment may use the applicant's Easifix (RTM) system, as described for example in WO 99/17645 and developments thereof. Alternatively, the base 2 may be welded directly to a metal side wall of the kettle, or may be arranged for sealing against a glass wall of a kettle, as described for example in WO2002/001992.

In the description below, terms implying an orientation or direction such as 'under' and 'upper' are with reference to the orientation of a kettle resting in an upright position on a surface. References to 'central', 'inner' and outer' are with reference to a notional central vertical axis of such a kettle.

As shown in Figure 5, the kettle 50 has a liquid reservoir 52, the bottom of which is formed by the base 2 and the sides by the sidewall 51. The kettle 50 has a base portion 53 which is attached to the sidewall 51 and/or to the base 2 to form an underfloor compartment 54, which may contain for example a kettle control for controlling switching of the element 1 so as to heat water (or other liquid) in the reservoir 52 to the required temperature e.g. boiling. Electrical mains power may be supplied to the kettle 50 by a power lead or a cordless connector. As is conventional, the kettle 50 also has a handle 55, a lid 56 and a spout 57. Embodiments of the invention may alternatively be used with other types of liquid heating vessel such as hot water urns, Turkish tea makers, hot water pots, wort boiling kettles and the like. Embodiments of the invention are not limited to water boiling vessels, since noise may be generated by bubbles formed by localised boiling before the bulk liquid reaches boiling point. Hence, embodiments of the invention may be applicable to liquid heating vessels designed to heat liquid to sub-boiling temperatures.

The base 2 is formed from a stainless-steel plate having a substantially horizontal planar central portion 2a, a raised portion 2b positioned radially outwardly from the central portion 2b and arranged to project upwardly into the reservoir 52, and an outer rim 2c, which may form a substantially vertical flange around which a sealing ring is arranged for sealing against the side wall of the kettle, for example using the Easifix (RTM) system described above.

The thickness of the material of the base 2 may be in the range 0.5 mm to 4 mm, depending on structural and/or heat conducting requirements.

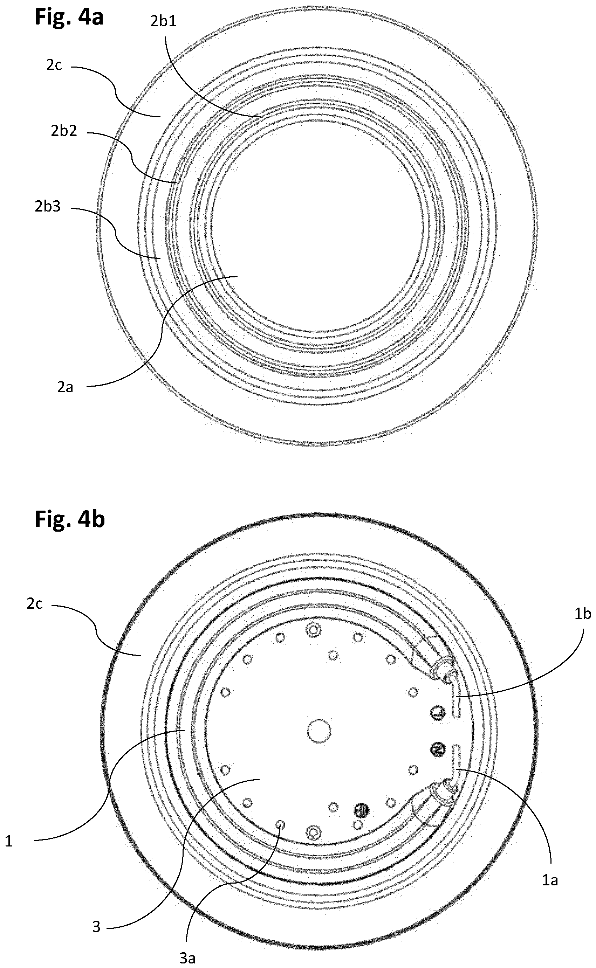

The raised portion 2b is configured so as to be aligned with e.g. opposite and directly above the heating element 1. The raised portion 2b may be substantially circular or have the form of a circular section when viewed from above as shown in Figure 4a. The heating element 1 may have the form of a circular section when viewed from below as shown in Figure 4b, having cold tails 1a, 1b arranged at either end of the circular section for connection of electrical power to the heating element 1. Where the raised portion 2b has the form of a circular section, this may be aligned with the circular section of the heating element 1; for example the raised portion 2b may have a lower section, close to or at the level of the planar central portion 2a, located between the cold tails 1a, 1b of the heating element 1.

The sheathed heating element 1 may comprises an electrical heating wire or coil encased in a metallic sheath, e.g. of aluminium, filled with a thermally conductive but electrically insulating material such as magnesium oxide.

The heating element 1 is attached to the underside of a heat diffuser plate 3, made for example of aluminium. On the upper side of the heat diffuser plate 3 is arranged a heat diffusing material 4 having a form that fits within the concave underside of the raised portion 2b so as to form a thermally conductive bridge between the heat diffuser plate 3 and the base 2. For example, the raised portion 2b may be approximately triangular or upwardly tapering in cross-section as shown in the drawings, and the heat diffusing material 4 may have a complementary approximately triangular and/or upwardly tapering cross-sectional shape that fits within the underside of the raised portion, in thermal contact therewith.

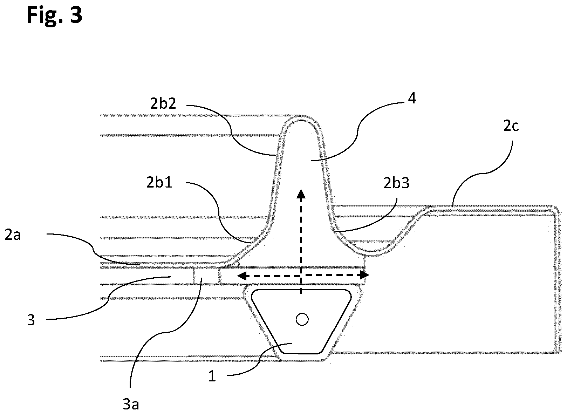

As shown by the dashed arrows in Figure 3, heat generated by the heating element 1 flows through the heat diffuser plate 3 and the heat diffusing material 4 to the raised portion 2b of the base 2, passing through the base 2 into the water being heated. Heat may also flow laterally through the heat diffuser plate 3 into the central portion 2a and/or the outer rim 2c, spreading the heat and reducing the maximum local temperature of the base 2 and thus reducing steam bubble formation during heating.

The raised portion 2b increases the surface area of the base 2 above the heating element 1 and therefore reduces the local power density and temperature on the upper surface of the base 2, thus reducing steam bubble formation during heating and thereby reducing heating noise. The arrangement of the raised portion 2b may also improve thermal conduction into the water, by increasing the surface area of the base 2 above the heating element 1 and/or by promoting convective flow of the heated water. Additionally, the cross-sectional profile of the raised portion 2b may inhibit the collapse of steam bubbles as they rise upwards along the surface of the raised portion 2b. The effects of reduced noise and/or improved thermal transfer may be caused by one or more of these effects, and the advantages of embodiments of the invention are not dependent on any particular theory of operation.

The raised portion 2b may increase the stiffness of the base 2 relative to a conventional planar base, and therefore reduce or modify vibrations in the base 2, such as mains hum induced by the heating element 1, which may contribute to heating noise. The increased stiffness of the base 2 may alternatively or additionally reduce noise generated through bubble nucleation and collapse, by modifying the natural or resonant frequency or frequencies of the assembly.

As shown in Figure 3, the cross-sectional profile of the raised portion 2b may comprise side portions 2b1, 2b3 of low gradient (e.g. 25-50°) so as to increase the surface area of the base 2 above the heating element, and a middle portion 2b2 of higher gradient (e.g. 60-85° or even 90° in parts) so as to form an apex projecting upwardly into cooler water so as to encourage convection. As shown in the drawings, the middle portion 2b2 may have a gradient that varies with radius e.g. with vertical or near-vertical sides and a central rounded portion. The side portions 2b1, 2b3 may also have a gradient that varies with radius. Other cross-sectional shapes may be used, although a generally upwardly tapering shape is advantageous in that its apex remains comparatively cool, creating a thermal gradient that draws heat away from the heating element.

The width of the cross-section of the raised portion 2b is preferably approximately equal to, or slightly greater than the width of the heating element 1. For example, the width of the raised portion may be in the range 10-20 mm, but may be larger or smaller than this, depending on the width of the heating element 1.

The height of the raised portion 2b e.g. above the level of the planar central portion 2a is preferably approximately equal to its width. For example, the height of the raised portion 2b may be in the range 8-16 mm; this may depend on the process used to form the raised portion 2b, which may limit the radius of curvature that can be achieved.

The heat diffuser plate 3 may be attached to the underside of the base 2, for example by brazing. It may be required to vent flux residue during the brazing process, in order to maintain a repeatable braze quality and process. For that purpose, the heat diffuser plate 3 may include a plurality of holes 3a, distributed evenly around the perimeter of the heat diffuser plate 3, for example around the inside edge of the heating element 1 and the raised portion 2b. In the example shown in Figure 4b, there are 12 holes of 3 mm diameter, but other sizes and/or numbers of holes may be used to similar effect. The holes 3a should be large enough to vent effectively, but not too large as to restrict the passage of thermal energy from the heating element 1 to the heat diffuser plate 3 and the water within the reservoir 52.

In one alternative embodiment, the heat diffuser plate 3 and the heat diffusing material 4 may be formed as an integral component. In another alternative, the heat diffuser plate 3 may be omitted and the heating element 1 may be attached directly to the underside of the heat diffusing material 4, which may have a width greater than that of the heating element 1. The heating element 1 preferably is not located within the raised portion 2b but is located below the plane of the central portion 2a.

In another alternative embodiment, the raised portion 2b of the base 2 may be omitted and the heat diffusing material 4 may be attached to the upper surface of the base 2, above the heating element 1.

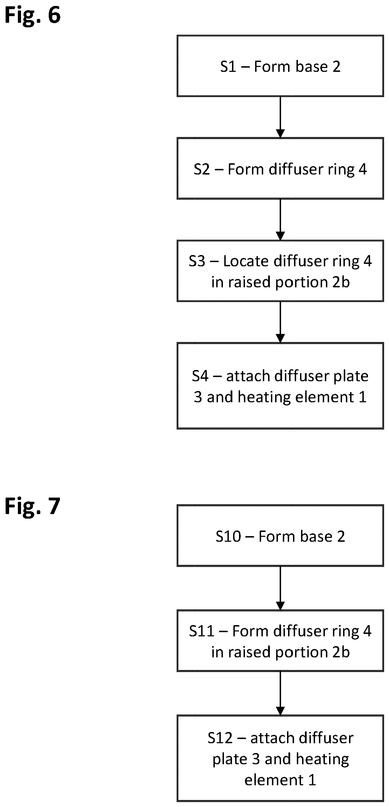

Figure 6 shows, in outline, one method of forming the heater in an embodiment in which the heat diffusing material 4 is pre-formed prior to location under the raised portion 2b. At step S1, the base 2 is formed, for example by pressing a piece of stainless steel sheet. At step S2, the heat diffusing material 4 is formed as a component or set of components separate from the base 2. For example, the component or set of components may form a ring of diffuser material. The order of steps S1 and S2 may be reversed or they may be performed in parallel.

At step S3, the component or components forming the heat diffusing material 4 is/are located in the concave underside of the raised portion 2b. If the heat diffuser plate 3 is a separate component from the heat diffusing material 4, then the heat diffuser plate 3 may be attached to the lower faces of the base 2 and/or the heat diffusing material at step S4, for example by brazing. The heating element 1 may also be attached at this stage, or may have previously been attached to the heat diffuser plate 3, if present, or to the underside of the heat diffusing material 4.

The heat diffusing material 4 may be formed by pressing, casting, or extrusion, for example. As an alternative to aluminium, the heat diffusing material 4 may be formed of one or more alternative or additional materials such as magnesium oxide.

Figure 7 shows, in outline, an alternative method of forming the heater in an embodiment in which the heat diffusing material 4 is formed within the concave underside of the raised portion 2b. At step S10, the base 2 is formed, for example as in step S1 above. At step S11, the diffuser 4 is formed within the concave underside of the raised portion 2b. The heat diffusing material 4 may be formed by pouring or compacting material into the concave underside of the raised portion 2b of the base 2, which may for example be used as a mould for forming the heat diffusing material 4, before attachment of the heat diffuser plate 3 and/or the heating element 1 as in step S12.

The shape of the raised portion 2b may be dictated at least to some extent by the process used to form the base 2 and the need for structural integrity of the base 2. For example, it may not be necessary that the raised portion 2b is circular in plan view; it may have the form of a circular section matching the circular sectional shape of the heating element 1.

The heating element 1 may be a thick film element instead of a sheathed heating element, for example with heating tracks deposited on the underside of an element plate in place of the heat diffuser plate 3. In that case, the raised portion may be arranged above the heating tracks. There may be multiple heating tracks and therefore multiple raised portions, each of approximately the same width or wider than the heating tracks.

Although the above specific description relates primarily to an electric kettle, a similar heating arrangement may be provided in other water heating or boiling vessels such as urns, Turkish tea makers and the like. Although the noise problems described above primarily occur with heating water, some embodiments may be applicable to vessels for heating other liquids where similar noise problems occur.

### Alternative Embodiments

Alternative embodiments which may occur to the skilled person on reading the above description may nevertheless fall within the scope of the invention as defined by the following claims.

### Alternative Statements of Invention

Alternative Statements of Invention are recited below as numbered clauses.
1. An electrical heater for a liquid heating vessel, the heater comprising a base plate having an upper side for forming at least part of the floor of a liquid reservoir of the vessel and an underside to which an electrical heating element is directly or indirectly attached, wherein the base plate includes a raised portion arranged to project upwardly into the reservoir, the raised portion including heat diffusing material and being arranged above the heating element such that heat generated by the heating element passes through the heat diffusing material.
2. The electrical heater of clause 1, wherein the raised portion comprises a portion of the base plate.
3. The electrical heater of clause 2, wherein the heat diffusing material is located at least partially within a concave underside of the raised portion.
4. The heater of clause 3, wherein the heat diffusing material comprises a pre-formed component.
5. The heater of clause 3, wherein the heat diffusing material is formed within the concave underside of the raised portion.
6. The heater of any preceding clause, including a heat diffuser plate arranged between the heating element and the heat diffusing material.
7. The heater of clause 6, wherein the heat diffuser plate is integrally formed with the heat diffusing material.
8. The heater of clause 6 or clause 7, wherein the heat diffuser plate is attached to the underside of the base by brazing.
9. The heater of clause 8, wherein the heat diffuser plate includes a plurality of venting apertures for venting flux residue during brazing.
10. The heater of any preceding clause, wherein the base plate has a planar central section, the raised portion being arranged outwardly from the planar central section and projecting upwardly from a plane of the central section.
11. The heater of clause 10, wherein the base plate includes an outer rim arranged outwardly from the raised portion.
12. The heater of clause 10 or clause 11, wherein the electrical heating element is arranged below the plane of the central section.
13. The heater of clause 1, wherein the heat diffusing material is formed on or attached to an upper surface of the base plate, thereby forming the raised portion.
14. The heater of any preceding clause, wherein the raised portion tapers in an upward direction.
15. The heater of clause 13, wherein at least a part of the raised portion is triangular in cross section.
16. The heater of clause 13 or clause 15, wherein the raised portion has at least one side portion of low gradient and a middle section of higher gradient.
17. The heater of any preceding clause, wherein the raised portion is circular or is a circular section in plan.
18. The heater of any preceding clause, where the width of the raised portion is greater than or equal to the width of the heating element.
19. The heater of clause 18, wherein the width of the raised portion is between 10 and 20 mm.
20. The heater of any preceding clause, wherein the height of the raised portion is between 8 and 16 mm.
21. The heater of any preceding clause, wherein the heat diffusing material has a higher thermal conductivity than the material of the base plate.
22. The heater of any preceding clause, wherein the heat diffusing material comprises magnesium oxide or aluminium.
23. The heater of any preceding clause, wherein the base plate comprises stainless steel.
24. The heater of any preceding clause, wherein the electrical heating element comprises a sheathed heating element.
25. The heater of any one of clauses 1 to 20, wherein the electrical heating element comprises a thick film heating element.
26. A liquid heating vessel including the electrical heater of any preceding clause.
27. A method of forming the heater of clause 4, or any one of clauses 6 to 25 when dependent thereon, including forming a component comprising the heat diffusing material prior to location of the heat diffusing material within the concave underside of the raised portion.
28. A method of forming the heater of clause 5, or any one of clauses 6 to 25 when dependent thereon, including forming the heating diffusing material within the concave underside of the raised portion.

## Claims

1. An electrical heater for a liquid heating vessel, the heater comprising a base plate having an upper side for forming at least part of the floor of a liquid reservoir of the vessel and an underside to which an electrical heating element is directly or indirectly attached, wherein the base plate includes a raised portion arranged to project upwardly into the reservoir, the raised portion including heat diffusing material and being arranged above the heating element such that heat generated by the heating element passes through the heat diffusing material.

2. The electrical heater of claim 1, wherein the raised portion comprises a portion of the base plate.

3. The electrical heater of claim 2, wherein the heat diffusing material is located at least partially within a concave underside of the raised portion.

4. The heater of claim 3, wherein the heat diffusing material comprises a pre-formed component.

5. The heater of claim 3, wherein the heat diffusing material is formed within the concave underside of the raised portion.

6. The heater of any preceding claim, including a heat diffuser plate arranged between the heating element and the heat diffusing material.

7. The heater of claim 6, wherein the heat diffuser plate is integrally formed with the heat diffusing material.

8. The heater of claim 6 or claim 7, wherein the heat diffuser plate is attached to the underside of the base by brazing, optionally wherein the heat diffuser plate includes a plurality of venting apertures for venting flux residue during brazing.

9. The heater of any preceding claim, wherein the base plate has a planar central section, the raised portion being arranged outwardly from the planar central section and projecting upwardly from a plane of the central section; optionally wherein the base plate includes an outer rim arranged outwardly from the raised portion; optionally wherein the electrical heating element is arranged below the plane of the central section.

10. The heater of claim 1, wherein the heat diffusing material is formed on or attached to an upper surface of the base plate, thereby forming the raised portion.

11. The heater of any preceding claim, wherein the raised portion tapers in an upward direction; optionally wherein at least a part of the raised portion is triangular in cross section; optionally wherein the raised portion has at least one side portion of low gradient and a middle section of higher gradient.

12. The heater of any preceding claim, wherein the raised portion is circular or is a circular section in plan and/or the width of the raised portion is greater than or equal to the width of the heating element.

13. The heater of any preceding claim, wherein the heat diffusing material has a higher thermal conductivity than the material of the base plate.

14. A method of forming the heater of claim 4, or any one of claims 6 to 13 when dependent thereon, including forming a component comprising the heat diffusing material prior to location of the heat diffusing material within the concave underside of the raised portion.

15. A method of forming the heater of claim 5, or any one of claims 6 to 13 when dependent thereon, including forming the heating diffusing material within the concave underside of the raised portion.
